# EUROPEAN PATENT APPLICATION

(11) **EP 4 840 761 A1**
(43) Date of publication of application: **18.11.2026**
(21) Application number: 26179385.5
(22) Date of filing: 18.05.2026
(51) Int. Cl.: B64D 31/06, B64D 31/04

(54) **AIRCRAFT ENGINE CONTROL FOR OPTIMAL GROUND MOVEMENT INITIATION AND CONSERVATION**

(30) Priority: 16.05.2025 US 202519210785
(71) Applicant: Pratt & Whitney Canada Corp., Longueuil, Québec J4G 1A1 (CA)
(72) Inventor: BOISLARD, Nicolas, (01BE5) Longueuil, J4G 1A1 (CA)
(74) Representative: Dehns

(57) **Abstract**

A method for aircraft engine control includes receiving a power input (402) from a power lever (302), receiving a movement initiation input (404) from a movement initiation interface, generating, using a first propulsor controller (410), a movement power profile using a nominal law function (412) and a movement initiation function (414) based on the power input (402) and the movement initiating input (404), and actuating, using the first propulsor controller (410), effectors (419) of an engine (150) of an aircraft (100) based on the movement power profile.

## Description

### TECHNICAL FIELD

This disclosure relates generally to engine controls and processes. More specifically, this disclosure relates to an aircraft engine control method for optimal ground movement initiation and conservation.

### BACKGROUND

The initiation of movement of an aircraft on the ground requires more force than required to maintain movement for ground maneuvers. To initiate the movement of its aircraft, the pilot must command short bursts of power to the engine. This is not easy to achieve through a normal power lever and often command too much power. This excess leads to extra cycling of the engine, passenger discomfort as pilot needs to apply breaks, extra fuel consumption, and extra noise created by the engine.

Accordingly, there is a need for improved methods and systems for aircraft engine control that allows for optimal ground movement initiation and conservation.

### SUMMARY

This disclosure provides an aircraft engine control method for optimal ground movement initiation and conservation.

In some examples, a method is provided. The method includes receiving a movement initiation input from a movement initiation interface, generating, using a first propulsor controller, a movement power profile using a nominal law function and a movement initiation function based on the power input and the movement initiating input, and actuating, using the first propulsor controller, effectors of an engine of an aircraft based on the movement power profile.

Any single one or any combination of the following features may be used with the above embodiment. The method may include, before generating the movement power profile, receiving supplemental input from one or more sensors of the engine. Generating the movement power profile using the nominal law function and the movement initiation function based on the power input and the movement initiating input may include using the supplemental input in the movement initiation function to generate the movement power profile. The supplemental input may include input from a second propulsor controller operably coupled to the first propulsor controller. Generating the movement power profile using the nominal law function and the movement initiation function based on the power input and the movement initiating input may include adjusting the movement initiation function based on the power input and the supplemental input, summing the adjusted movement initiation function and the nominal law function, and generating the movement power profile based on the sum of the adjusted movement initiation function and the nominal law function. Generating the movement power profile using the nominal law function and the movement initiation function based on the power input and the movement initiating input may include combining an output of the nominal law function and an output of the movement initiation function. Combining the outputs of the nominal law function and the movement initiation function to generate the movement power profile may include summing the outputs of the nominal law function and the movement initiation function.

In other examples, an electronic device is provided. The electronic device includes a control, a movement initiation interface, one or more sensors coupled to an aircraft, and at least one processor coupled to the control, the movement initiation interface, and the one or more sensors. The at least one processor is configured to cause the electronic device to receive a power input from the control, receive a movement initiation input from the movement initiation interface, generate a movement power profile using a nominal law function and a movement initiation function based on the power input and the movement initiating input, and actuate effectors of an engine of the aircraft based on the movement power profile.

Any single one or any combination of the following features may be used with the above embodiment. The at least one processor may be further configured to cause the electronic device to before generating the movement power profile, receive supplemental input from the one or more sensors of the aircraft. While causing the electronic device to generate the movement power profile using the nominal law function and the movement initiation function based on the power input and the movement initiating input, the at least one processor may be configured to cause the electronic device to use the supplemental input in the movement initiation function to generate the movement power profile. The supplemental input may include input from a second propulsor controller operably coupled to the electronic device. While causing the electronic device to generate the movement power profile using the nominal law function and the movement initiation function based on the power input and the movement initiating input, the at least one processor may be configured to cause the electronic device to adjust the movement initiation function based on the power input and the supplemental input, sum the adjusted movement initiation function and the nominal law function, and generate the movement power profile based on the sum of the adjusted movement initiation function and the nominal law function. While causing the electronic device to generate the movement power profile using the nominal law function and the movement initiation function based on the power input and the movement initiating input, the at least one processor may be configured to cause the electronic device to combine an output of the nominal law function and an output of the movement initiation function. While causing the electronic device to combine the outputs of the nominal law function and the movement initiation function to generate the movement power profile, the at least one processor may be configured to cause the electronic device to sum the outputs of the nominal law function and the movement initiation function.

In still other examples, a non-transitory computer-readable medium is provided. The non-transitory computer-readable medium includes program code, that when executed by at least one processor of an electronic device, causes the electronic device to receive a power input from a control, receive a movement initiation input from a movement initiation interface, generate a movement power profile using a nominal law function and a movement initiation function based on the power input and the movement initiating input, and actuate effectors of an engine of an aircraft based on the movement power profile.

Any single one or any combination of the following features may be used with the above embodiment. The program code may include program code, that when executed by the at least one processor, causes the electronic device to before generating the movement power profile, receive supplemental input from the one or more sensors of the aircraft. The program code, that when executed by the at least one processor, causes the electronic device to generate the movement power profile using the nominal law function and the movement initiation function based on the power input and the movement initiating input, may include program code, that when executed by the at least one processor, causes the electronic device to use the supplemental input in the movement initiation function to generate the movement power profile. The program code, that when executed by the at least one processor, causes the electronic device to generate the movement power profile using the nominal law function and the movement initiation function based on the power input and the movement initiating input, may include program code, that when executed by the at least one processor, causes the electronic device to adjust the movement initiation function based on the power input and the supplemental input, sum the adjusted movement initiation function and the nominal law function, and generate the movement power profile based on the sum of the adjusted movement initiation function and the nominal law function. The program code, that when executed by the at least one processor, causes the electronic device to generate the movement power profile using the nominal law function and the movement initiation function based on the power input and the movement initiating input, may include program code, that when executed by the at least one processor, causes the electronic device to combine an output of the nominal law function and an output of the movement initiation function. The program code, that when executed by the at least one processor, causes the electronic device to combine the outputs of the nominal law function and the movement initiation function to generate the movement power profile, may include program code, that when executed by the at least one processor, causes the electronic device to sum the outputs of the nominal law function and the movement initiation function.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates an example aircraft with engines in accordance with this disclosure;
FIGURE 2A illustrates an example engine in a turboprop configuration in accordance with this disclosure;
FIGURE 2B illustrates an example engine in a turbofan configuration in accordance with this disclosure;
FIGURES 3A through 3C illustrate block diagrams of an example engine control system in accordance with this disclosure;
FIGURE 4 illustrates a block diagram of an example movement initiation control system in accordance with this disclosure;
FIGURE 5 illustrates an example method for aircraft engine control with ground movement initiation and conservation according to this disclosure; and
FIGURE 6 illustrates an example device for aircraft engine control with ground movement initiation and conservation in accordance with this disclosure.

### DETAILED DESCRIPTION

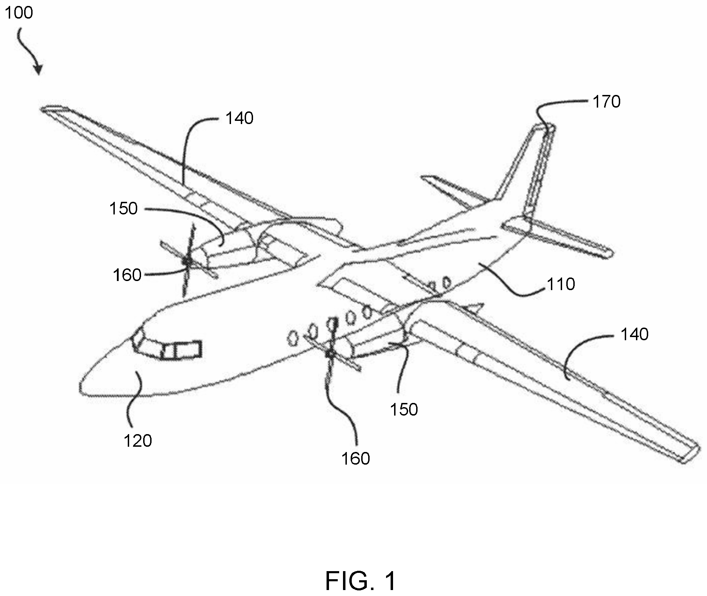

FIGURES 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As discussed above, the initiation of movement of an aircraft on the ground requires more force than required to maintain movement for ground maneuvers. To initiate the movement of its aircraft, the pilot must command short bursts of power to the engine. This is not easy to achieve through a normal control, such as a power lever, and often command too much power. This excess leads to extra cycling of the engine, passenger discomfort as pilot needs to apply breaks, extra fuel consumption, and extra noise created by the engine.

The present disclosure provides systems and methods for movement initiation of an aircraft during flight. In particular, the present disclosure provides systems and methods that include a control loop to create a profile of power so the aircraft is put into motion with minimal effort, and without the need to manipulate the standard power lever with the same profile or without the need to manipulate the power lever. The control loop will increase engine power (or thrust) produced until a desired speed is achieved. Alternatively, the feedback of the control loop could be any other signal than speed, such as longitudinal acceleration.

FIGURE 1 illustrates an example aircraft 100 with engines in accordance with this disclosure. Although shown with gas turbine engines, the aircraft 100 may include other aircraft engine types, such as electric motors or reciprocating engines.

As shown in FIGURE 1, the aircraft 100 includes a fuselage 110, a pair of wings 140 (or more), engines 150, propellers 160, and a tail 170. The aircraft 100 may be any suitable aircraft (e.g., corporate, private, commercial) which includes multiple engines 150 and propellers 160. Collectively, an engine-propeller pair may be referred to as a "powerplant." The aircraft 100 may be a fixed wing or a rotary wing aircraft. The fuselage 110 has a cockpit 120, which may be positioned at any suitable location on the aircraft 100, for example at a front portion of the fuselage 110. The cockpit 120 is configured for accommodating one or more operators who control the aircraft 100 by way of one or more operator controls. The operator controls may include any suitable number of pedals, yokes, steering wheels, center sticks, flight sticks, levers, knobs, switches, and the like. Although two engines 150 are shown, the aircraft 100 may have any suitable number of engines, for example three, four, six, eight, or more.

The engines 150 effect rotational motion in the propellers 160, which in turn produce thrust via propeller blades, causing the aircraft 100 to be displaced. The propeller blades are configured for assuming a propeller blade angle, which varies the thrust produced by the propellers 160. The propeller blade angle is indicative of an orientation of the blades of the propellers 160 relative to a particular reference angle. For example, a positive propeller blade angle may cause the propellers 160 to produce forward thrust, such as a thrust which displaces the aircraft 100 in a direction aligned with the heading of the aircraft 100. Conversely, a negative propeller blade angle may cause the propellers 160 to produce reverse thrust, which is substantially opposite positive thrust.

In certain circumstances, for example during cruise portions of a flight mission, it may be desired to engage automatic control of part or all of the operation of powerplants of the aircraft 100, including of the engines 150 and/or the propellers 160. Automatic control of the engines 150 (e.g., autothrottle) involves at least automatic control of a level of fuel flow to the engines 150. The autothrottle may also involve control of other operating parameters of the engines 150, including air intake and bleed, orientation of variable geometry mechanisms, and the like. In embodiments in which the aircraft 100 includes the propellers 160, the autothrottle may additionally control a rotational speed of the propellers 160.

Although FIGURE 1 illustrates an example aircraft 100 with gas turbine engines, various changes may be made to FIGURE 1. For example, various components in FIGURE 1 may be combined, further subdivided, replicated, omitted, or rearranged and additional components may be added according to particular needs.

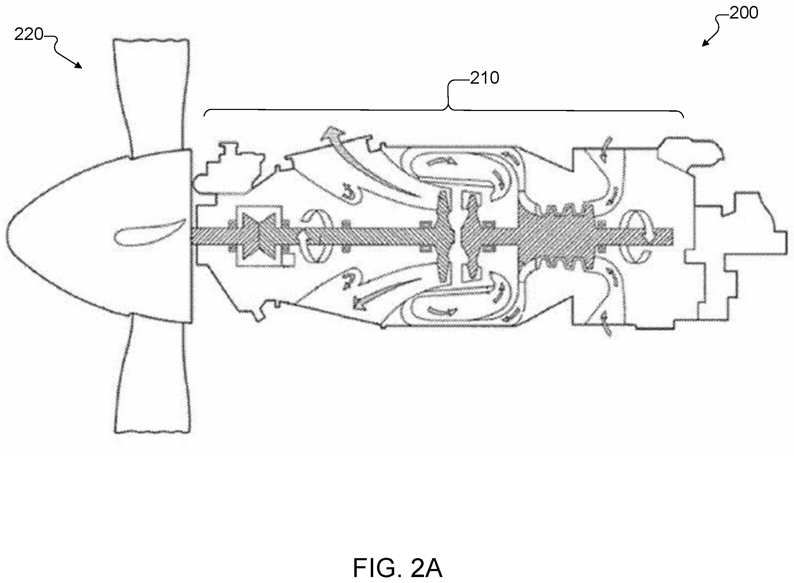

FIGURE 2A illustrates an example powerplant 200 in a turboprop configuration in accordance with this disclosure.

As shown in FIGURE 2A, the powerplant 200 is configured for a propeller-driven aircraft, generally including an engine 210 and a propeller 220. The propeller 220 converts rotary motion from a shaft of the engine 210 to provide propulsive force (thrust) for the aircraft. The thrust generated by the powerplant 200 includes the propeller thrust and the engine jet thrust. The propeller thrust is a function of many factors, such as ambient temperature, ambient pressure/altitude, airspeed, propeller rotational speed, and power input to the propeller by the engine, and the airfoil design of the propeller blades.

The powerplant 200 of FIGURE 2A is a turboprop engine, but it could also be any other type of engine including a propeller 220, such as a piston engine, a turboshaft engine, and the like. In regular operation, the engine 210 and the propeller 220 are regulated by a pilot or other operator by way of various control inputs.

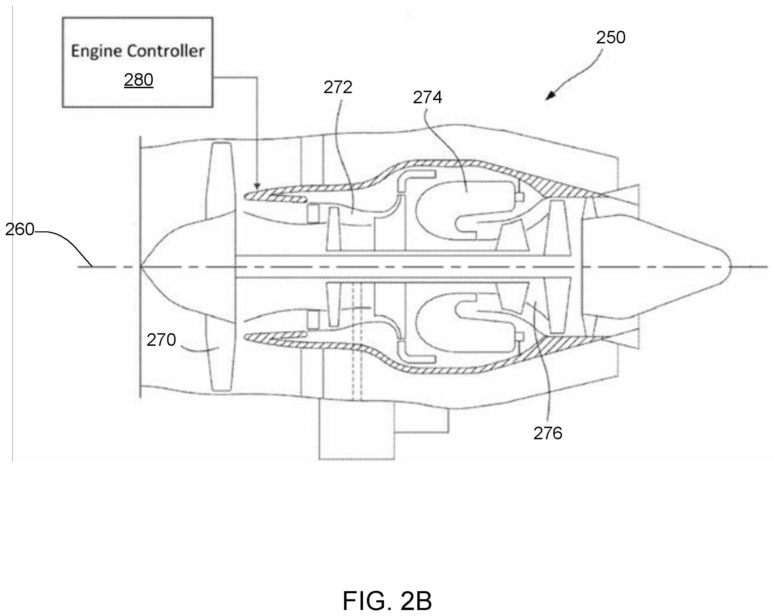

FIGURE 2B illustrates an example gas turbine engine 250 in a turbofan configuration in accordance with this disclosure.

As shown in FIGURE 2B, an example engine 250 to which the engine control methods and systems described herein may be applied. Note that while engine 250 is a turbofan engine, the engine control methods and systems may be applicable to turboprop, turboshaft, and other types of gas turbine engines, such as electric motors or reciprocating engines. In addition, the engine 250 may be an auxiliary power unit (APU), an auxiliary power supply (APS), a hybrid engine, or any other suitable type of engine.

The engine 250 generally includes a fan 270 through which ambient air is propelled, a compressor section 272 for pressurizing the air, a combustor 274 in which the compressed air is mixed with fuel and ignited for generating an annular stream of hot combustion gases, and a turbine section 276 for extracting energy from the combustion gases. An axis 260 defines an axial direction of the engine 250. In some embodiments, a low-pressure spool is composed of a low-pressure shaft and a low-pressure turbine. The low-pressure shaft drives the fan 270. A high-pressure spool is composed of a high-pressure turbine attached to a high-pressure shaft, which is connected to the compressor section 272. It should be noted that other configurations for the engine 250 are also considered.

Control of the operation of the engine 250 may be effected by one or more control systems, for example an engine controller 280. The engine controller 280 may modulate a fuel flow rate provided to the operating engine 250, the position and/or orientation of variable geometry mechanisms within the engine 250, a bleed level of the engine 250, and the like. Additionally, the engine controller 280 may operate the engine 250 so as to keep the speed of a given engine out of a selected speed range while maintaining the sum of the thrust of multiple engines to a level commanded by the aircraft. The engine controller 280 is configured to regulate engine speed, which is directly correlated to thrust. Thrust-setting logic in the engine controller 280 gathers parameters such as ambient conditions, bleed configuration, and thrust request (from a thrust lever) and outputs the engine speed at which the engine 250 should be regulated to deliver the required thrust.

Although FIGURES 2A-2B illustrate example powerplant 200 and gas turbine engine 250, various changes may be made to FIGURES 2A-2B. For example, various components in FIGURES 2A-2B may be combined, further subdivided, replicated, omitted, or rearranged and additional components may be added according to particular needs. Additionally, although propeller-based configurations and turbofan configurations are described, other engine configurations, including turbojet configurations, are contemplated as part of the present disclosure.

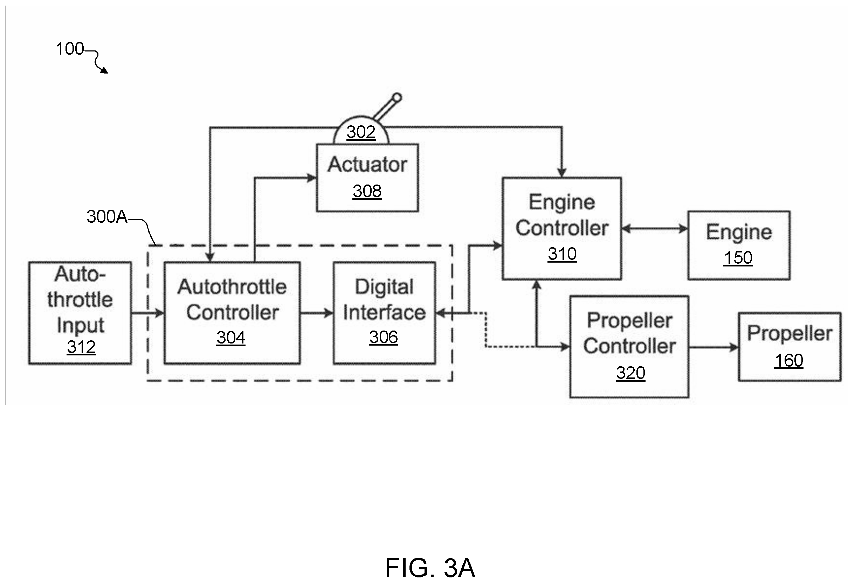

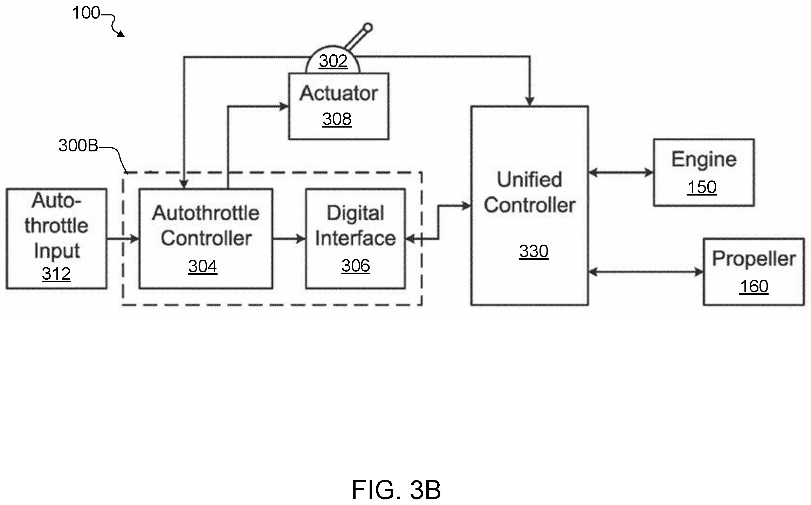

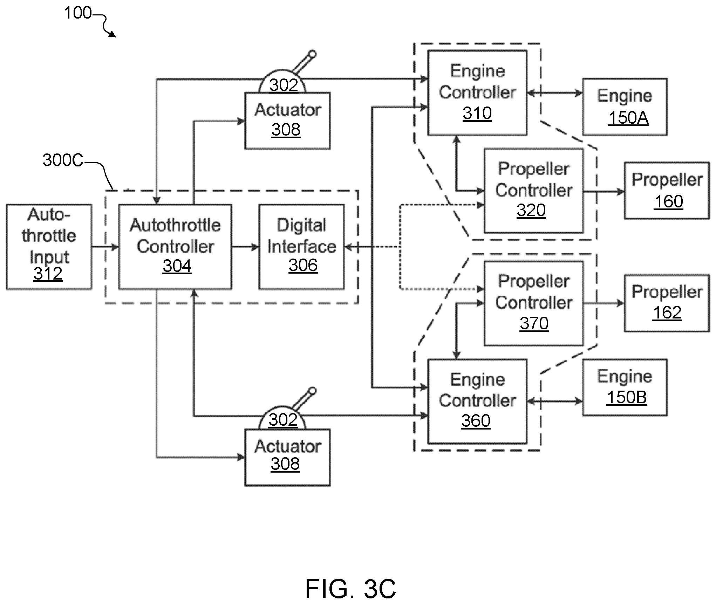

FIGURES 3A-3C illustrate block diagrams of example engine control systems 300A-300C in accordance with this disclosure. In particular, FIGURE 3A illustrates an engine control system 300A having a separate engine controller and propeller controller, FIGURE 3B illustrates an engine control system 300B having a unified controller, and FIGURE 3C illustrates an engine control system 300C for a multi-engine aircraft. The engine control systems 300A-300C described below may be coupled to any suitable aircraft engine or propulsor, such as gas turbine engines, electric motors, reciprocating engines, or a combination thereof.

As shown in FIGURE 3A, an engine control system 300A includes an autothrottle controller 304 and a digital interface 306. Although shown as separate components, the autothrottle controller 304 and the digital interface 306 may be implemented using a single entity or embedded engine controller, such as any suitable digital control components. The aircraft 100 additionally includes an engine controller 310 (e.g., for controlling operation of the engine 150), a propeller controller 320, (e.g., for controlling operation of the propeller 160), a control 302 (e.g., a thrust or power lever) coupled to an actuator 308, and an autothrottle input 312.

The control 302 allows an operator of the aircraft 100 to provide an indication of a desired power setting for the engine 150. The control 302 may be a power lever, a pedal (including a brake pedal), or a similar device, and a power setting for the engine 150 may be represented, for example, as a power lever angle, a position of the pedal, or a combination thereof. The control 302 may be an analog input device. The power lever may be provided with a plurality of settings, including a maximum takeoff setting, a flight idle setting, a ground idle setting, and a reverse thrust setting, each associated with respective power lever angles. The control 302 may provide a signal to the engine controller 310, which indicates the power lever angle, and the engine controller 310 may interpret the signal to determine one or more engine settings for the engine 150. In some embodiments, the control 302 also allows the operator to provide an indication of a desired rotational speed for the propeller 160. In other embodiments, the rotational speed for the propeller 160 is scheduled or otherwise defined as a function of the power setting for the engine 150.

The autothrottle input 312 allows an operator of the aircraft 100 to indicate that an autothrottle mode of operation for the powerplants of the aircraft 100 should be engaged. In many embodiments, the autothrottle mode is engaged for all powerplants of the aircraft 100 substantially simultaneously, and the particular control commands then issued to the powerplants may vary between powerplants. In some embodiments, the autothrottle mode controls operation of the engine 150 and the propeller 160, for example, using the engine controller 310 and the propeller controller 320. Alternatively, the autothrottle mode controls operation of the engine 150 using the engine controller 310 while operation of the propeller 160 may be effected using the engine controller 310. The autothrottle input 312 may be implemented via any suitable input device. For example, the autothrottle input 312 may be a button or other binary control. In other embodiments, the autothrottle input 312 includes a selection input via which a particular setting for the autothrottle control may be selected, such as an airspeed or a rate of fuel expenditure.

The engine controller 310 may be implemented using a full-authority digital electronic controller (FADEC) or similar digital control device. The propeller controller 320 may be implemented using a propeller electronic control (PEC) or similar digital control device. In operation, the engine controller 310 obtains a power request for the engine 150 from the control 302, which may be a power lever angle. The engine controller 310 may then issue various commands to engine 150 and to the propeller controller 320, which in turn may issue commands to the propeller 160. The operating parameters of the engine 150 and the propeller 160 may be altered to produce output power commensurate with the power request issued using the control 302.

The autothrottle controller 304 is communicatively coupled to the control 302, to the autothrottle input 312, to the digital interface 306, and to the actuator 308. The autothrottle controller 304 may obtain, from the control 302, an indication of the power setting for the engine 150, for instance the aforementioned power lever angle. In addition, autothrottle controller 304 is configured for obtaining, from the autothrottle input 312, a request to engage the autothrottle mode, and optionally one or more settings for the autothrottle mode.

In response to obtaining the autothrottle request, the autothrottle controller 304 may command the digital interface 306 to produce a digital power request for transmission to the engine controller 310. For example, the autothrottle controller 304 and/or the digital interface 306 may translate the information provided as part of the autothrottle request into a requisite power setting for the engine 150 using any suitable algorithm, scheduling table, lookup table, or a combination thereof.

In some embodiments, when the engine controller 310 engages the autothrottle mode in response to the digital power request, the engine controller 310 determines a requisite power for the engine 150 for achieving a power level satisfying the digital power request. Additionally, in some cases, the engine controller 310, or the propeller controller 320, also determines a requisite propeller rotational speed for the propeller 160 for achieving the power level satisfying the digital power request. Once the requisite power for the engine 150, and optionally the requisite propeller rotational speed for the propeller 160, are determined, the engine controller 310 and/or the propeller controller 320 cause the engine 150 and the propeller 160 to operate commensurately with the requisite power for the engine 150 and propeller rotational speed for the propeller 160.

In some embodiments, the autothrottle controller 304 is configured for adjusting the control 302 based on the digital power request produced by the digital interface 306. For example, in cases in which the autothrottle request results in a significant change in the power produced by the engine 150, a mismatch between the actual power level of the engine 150 and the power level which would be requested if the engine 150 were controlled based on the control 302 results. By adjusting the control 302 based on the digital power request, a transition from the autothrottle mode to another flight mode, for example the manual input mode, may be performed more smoothly, reducing a so-called "thrust bump". In some embodiments, adjustments to the control 302 are also performed in order to reduce or eliminate the possibility of "loss of thrust control", which may be required by certain regulatory bodies.

Alternatively, as shown in FIGURE 3B, the engine controller 310 and the propeller controller 320 may be replaced by a unified controller 330, which is configured for controlling operation of both the engine 150 and the propeller 160. The unified controller 330 may be controlled based on the control 302, for instance when operating in the manual input mode. When the unified controller 330 receives the digital power request via the digital interface 306 from the autothrottle controller, the unified controller 330 is configured for terminating the manual input mode and for engaging the autothrottle mode, thereby controlling the engine 150 and the propeller 160 based on the digital power request. The unified controller 330 may use the same control laws, algorithms, schedules, and tables in both the autothrottle mode and the manual input mode while different inputs based on the mode of operation.

The unified controller 330 may be configured for receiving the digital thrust request from the digital interface 306. The unified controller 330 may then determine, based on the digital thrust request, a requisite power level for the engine 150 and a requisite rotational speed for the propeller 160. For example, the unified controller 330 may produce a digital power request, used within the engine controller 310, and optionally a digital rotational speed request, which may be provided to the propeller controller 320. Still other approaches are considered.

Further, as shown in FIGURE 3C, the aircraft 100 may include multiple powerplants. For example, the aircraft 100 may be provided with two engines 150A, 150B, and two propellers 160, 162. However, the aircraft may be provided with any suitable number of engines and propellers, for example, three, four, six, eight, or more. The engine 150A is controlled by the engine controller 310, the propeller 160 is controlled by the propeller controller 320, the engine 150B is controlled by engine controller 360, and the propeller 162 is controlled by propeller controller 370. Alternatively, the engine and propeller controllers may be replaced by unified controllers as appropriate.

The engine control system 300C is thus coupled to controllers for both engines 150A, 150B, via the digital interface 306. The digital interface 306 is configured for providing digital power requests to controllers for both engines 150A, 150B, in order to cause the engines 150A, 150B, to operate in the autothrottle mode. In some embodiments, both the engine controllers 310, 360 receive the same digital power request. In other embodiments, the engine controllers 310, 360 receive different power requests, for example power requests that are scaled based on operating parameters of the engines 150A, 150B, as provided by the engine controllers 310, 360.

Although FIGURES 3A-3C illustrates example engine control systems 300A-300C, various changes may be made to FIGURES 3A-3C. For example, various components in FIGURES 3A-3C may be combined, further subdivided, replicated, omitted, or rearranged and additional components may be added according to particular needs.

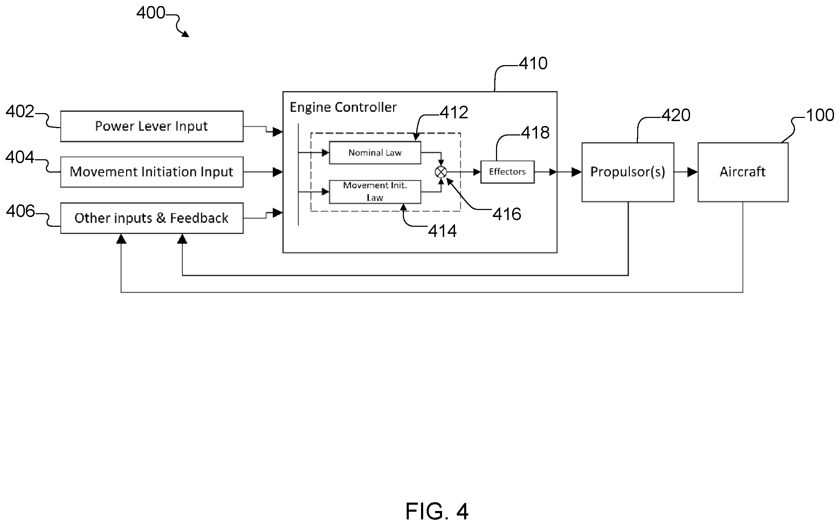

Although the engine control systems 300A-300C provide smoother movement of an aircraft, the engine control systems may also include a movement initiation control system to further improve engine control (e.g., while the aircraft is on the ground or in a ground idle setting) to minimize effort needed to put the aircraft into motion. For example, the engine control system may include a movement initiation control system as shown in FIGURE 4.

FIGURE 4 illustrates a block diagram of an example movement initiation control system 400 in accordance with this disclosure.

As shown in FIGURE 4, the movement initiation control system 400 includes a propulsor controller 410 configured to receive a power input 402 (such as from the control 302), a movement initiation input 404, and a supplemental input 406. The power input 402 may be, for example, a thrust demand or other engine power control input. The propulsor controller 410 includes a nominal control law function 412 and a movement initiation function 414. The nominal control law function 412 may receive the power input 402. The movement initiation function 414 may receive the power input 402, the movement initiation input 404, and the supplemental input 406. The power input 402 may originate from a power lever (e.g., actuator of FIGURES 3A-3C). The supplemental input 406 may be sensor input (e.g., from wind speed sensors, acceleration sensors, vision sensors, brake pressure, or a combination thereof). In multiple engine systems, the supplemental input 406 may also include input from other propulsor controllers 410 of the aircraft 100.

The received power input 402, the movement initiation input 404, and the supplemental input 406 are input into the nominal control law function 412 and the movement initiation function 414 for a given aircraft movement. The nominal control law function 412 receives the power input 402 and maintains a nominal thrust. The movement initiation function 414 receives the power input 402, the movement initiation input 404, the supplemental input 406, or a combination thereof to generate a movement power profile of the movement given system conditions.

To determine the movement power profile for the engine 150, the propulsor controller 410, such as in the nominal control law function 412, may be provided with any suitable thrust conversion algorithms for determining the appropriate operating parameters for the engine 150. In some embodiments, the propulsor controller 410 is provided with various information about the operating conditions of the engine 150 (e.g., from the supplemental input 406), including factors for determining forces opposing aircraft motion.

For example, the movement initiation control system 400 determines a thrust level for the powerplant(s) of the aircraft 100 based on the nominal control law function 412, which may include the thrust contributions of both the engine 150 and the propeller 160 of the powerplant 200. The nominal control law function 412 may contain schedules, lookup tables, algorithms, and the like to determine a nominal thrust required for a requested movement (e.g., based on the power input 402). Similarly, the movement initiation function 414 may also include schedules, lookup tables, algorithms, and the like to generate different movement power profiles based on the power input 402 and the supplemental input 406 (e.g., sensor data).

The output of the nominal control law function 412 and the output of the movement initiation function 414 are then combined in a combiner 416. Combination of the outputs of the nominal control law function 412 and the movement initiation function 414 may include summing the outputs of the nominal control law function 412 and the movement initiation function 414. The output of the movement initiation function 414 may be variable and adjust in value according to the generated movement power profile of the initiated movement (e.g., the power input 402). The combined outputs of the nominal control law function 412 and the movement initiation function 414 are then transmitted to effectors 418 (e.g., fuel system controls) that then control a propulsor 420. The propulsor 420 may be the powerplant 200 or other engine (e.g., the engine 250) that powers the aircraft 100.

Other input or feedback data from the aircraft 100 may be fed into the propulsor controller 410 to create a control loop that continuously or periodically adjusts the movement power profile generated by the propulsor controller 410 for any given desired movement. For example, the movement initiation control system 400 may obtain (e.g., using the digital interface 306 or via supplemental input 406) information regarding changes in operating conditions of the powerplant 200. Changes in operating conditions may include, but are not limited to, changes in ambient temperature, tire pressure, aircraft altitude, aircraft weight, inertial measurements, and airspeed. In response to these changes, the movement initiation control system 400 is configured for issuing a subsequent digital power request to adjust the operation of the powerplant 200, via the propulsor controller 410, to align the operation of the propulsor 420 with the movement power profile generated by the movement initiation function 414.

Although FIGURE 4 illustrates an example movement initiation control system 400, various changes may be made to FIGURE 4. For example, various components in FIGURE 4 may be combined, further subdivided, replicated, omitted, or rearranged and additional components may be added according to particular needs. Additionally, although only one propulsor controller coupled to one propulsor, multiple-propulsor systems may include multiple propulsor controllers, each configured as described above, and coupled to each other such that each propulsor controller receives input (e.g., as part of the supplemental input 406) from the other propulsor controllers in the system. In such configurations, each propulsor controller generates a movement power profile for a requested movement based on input from the other propulsor controllers in the system to coordinate thrust at each propulsor for a given movement.

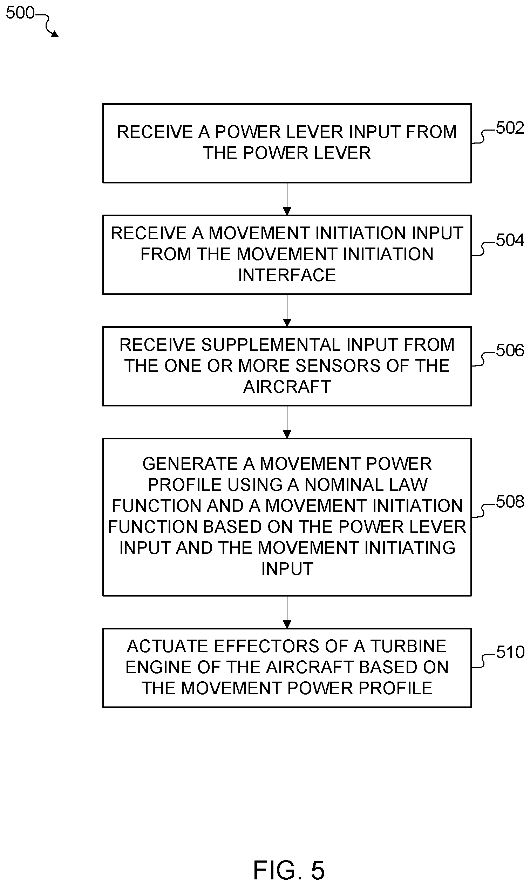

FIGURE 5 illustrates an example method 500 for aircraft engine control with ground movement initiation and conservation according to this disclosure. For ease of explanation, the method 500 of FIGURE 5 is described as being performed using the movement initiation control system 400 of FIGURE 4. However, the method 500 may be used with any other suitable system and any other suitable engine control system.

As shown in FIGURE 5, receive a power input 402 from the power lever at step 502. For example, a control 302 (e.g., a power lever) may be moved or displaced by a user to indicate a power requirement for a movement. The displacement of the control 302 creates the power input 402 that is then transmitted to the propulsor controller 410 of the movement initiation control system 400.

A movement initiation input 404 is received from the movement initiation interface at step 504. For example, a user may interact with a movement initiation interface to start a movement initiation mode. The movement initiation interface may be a button or switch. In such configurations, the user may press the button or toggle the switch to create and transmit the movement initiation input 404 to the propulsor controller 410 of the movement initiation control system 400 (e.g., located in the FADEC or EEC of the aircraft 100).

Supplemental input 406 is received from the one or more sensors of the aircraft at step 506. For example, the supplemental input 406 is created by one or more sensors of the aircraft 100, such as wind speed sensors, acceleration sensors, and vision sensors, then transmitted to the propulsor controller 410 of the movement initiation control system 400. The supplemental input 406 may also include input from a second propulsor controller operably coupled to the first propulsor controller 410.

A movement power profile is generated using a nominal control law function 412 and a movement initiation function 414 based on the power input 402 and the movement initiation input 404 at step 508. For example, the nominal control law function 412 and a movement initiation function 414 may each produce an output based on the received power input 402. The movement power profile is then created using the outputs of the nominal control law function 412 and the movement initiation function 414. Generating the movement power profile may also include using the supplemental input 406 in the movement initiation function 414 to generate the movement power profile. For example, the supplemental input 406 may be used to adjust the output of the movement initiation function 414 (e.g., adjusting generated values up or down) correspondingly. The outputs of the nominal control law function 412 and the movement initiation function 414 are then combined using the combiner 416 to generate the movement power profile. Combining the nominal control law function 412 and the movement initiation function 414 may include summing the nominal control law function 412 and the movement initiation function 414.

As such, generating the movement power profile may include adjusting the movement initiation function 414 based on the power input 402 and the supplemental input 406, summing the adjusted movement initiation function 414 and the nominal control law function 412, and generating the movement power profile based on the sum of the adjusted movement initiation function 414 and the nominal control law function 412.

Effectors 418 of a turbine engine of the aircraft are actuated based on the movement power profile at step 510. For example, the effectors 418 receive the movement power profile generated by the propulsor controller 410 and effect or control related systems (e.g., fuel systems) to create the required power or thrust at the propulsor 420. For example, if the movement power profile requires a steep increase in thrust followed by a slow decrease in thrust over a duration of the movement, the effectors 418 may increase fuel flow to the propulsor 420 to increase thrust before reducing fuel flow during the decrease in thrust requirement, tracking the movement power profile.

Although FIGURE 5 illustrates one example of a method 500 for aircraft engine control with ground movement initiation and conservation, various changes may be made to FIGURE 5. For example, while shown as a series of steps, various steps in FIGURE 5 may overlap, occur in parallel, or occur any number of times.

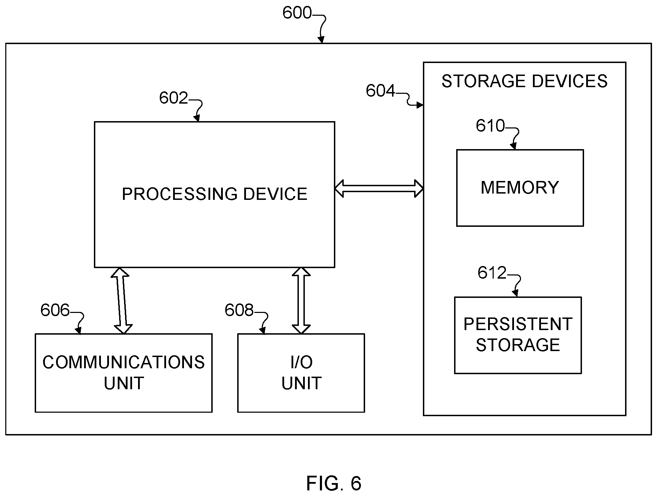

FIGURE 6 illustrates an example device 600 for aircraft engine control with ground movement initiation and conservation according to this disclosure. One or more instances of the device 600 (or portions thereof) may, for example, be used to, at least partially, implement the functionality of the movement initiation control system 400 of FIGURE 4. However, the functionality of the movement initiation control system 400 may be implemented in any other suitable manner.

As shown in FIGURE 6, the device 600 denotes a computing device or system that includes at least one processing device 602, at least one storage device 604, at least one communications unit 606, and at least one input/output (I/O) unit 608. The processing device 602 may execute instructions that can be loaded into a memory 610. The processing device 602 includes any suitable number(s) and type(s) of processors or other devices in any suitable arrangement. Example types of processing devices 602 include one or more microprocessors, microcontrollers, DSPs, ASICs, GPUs, FPGAs, or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random access memory or any other suitable volatile or non-volatile storage device(s). The persistent storage 612 may contain one or more components or devices supporting longer-term storage of data, such as a read only memory, hard drive, Flash memory, or optical disc.

The communications unit 606 supports communications with other systems or devices. For example, the communications unit 606 can include a network interface card or a wireless transceiver facilitating communications over a wired or wireless network. The communications unit 606 may support communications through any suitable physical or wireless communication link(s).

The I/O unit 608 allows for input and output of data. For example, the I/O unit 608 may provide a connection for user input through a keyboard, mouse, keypad, touchscreen, or other suitable input device. The I/O unit 608 may also send output to a display or other suitable output device. Note, however, that the I/O unit 608 may be omitted if the device 600 does not require local I/O, such as when the device 600 can be accessed remotely or operated autonomously.

In some embodiments, the instructions executed by the processing device 602 can include instructions that implement all or portions of the functionality of the movement initiation control system 400 described above. For example, the instructions executed by the processing device 602 can include instructions for aircraft engine control with ground movement initiation and conservation as described above.

Although FIGURE 6 illustrates one example of a device 600 for aircraft engine control with ground movement initiation and conservation, various changes may be made to FIGURE 6. For example, computing devices and systems come in a wide variety of configurations, and FIGURE 6 does not limit this disclosure to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate", as well as derivatives thereof, encompasses both direct and indirect communication. The terms "include" and "comprise", as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism", "module", "device", "unit", "component", "element", "member", "apparatus", "machine", "system", "processor", or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method comprising:
receiving a movement initiation input (404) from a movement initiation interface;
generating, using a first propulsor controller (410), a movement power profile using a nominal law function (412) and a movement initiation function (414) based on a power input (402) and the movement initiating input (404); and
actuating, using the first propulsor controller (410), effectors (418) of an engine (150) of an aircraft (100) based on the movement power profile.

2. The method of Claim 1, further comprising:
before generating the movement power profile, receiving supplemental input (406) from one or more sensors of the engine (150) or aircraft (100).

3. A non-transitory computer-readable medium comprising program code, that when executed by at least one processor (602) of an electronic device (600), causes the electronic device (600) to:
receive a power input (402) from a power lever (302);
receive a movement initiation input (404) from a movement initiation interface;
generate a movement power profile using a nominal law function (412) and a movement initiation function (414) based on the power input (402) and the movement initiating input (404); and
actuate effectors (418) of a turbine engine (150) of an aircraft (100) based on the movement power profile.

4. The non-transitory computer-readable medium of Claim 3, wherein the program code further comprises program code, that when executed by the at least one processor (602), causes the electronic device (600) to:
before generating the movement power profile, receive supplemental input (406) from one or more sensors of the aircraft (100).

5. The method of Claim 2 or the non-transitory computer-readable medium of Claim 4, wherein generating the movement power profile using the nominal law function (412) and the movement initiation function (414) based on the power input (402) and the movement initiating input (404) comprises using the supplemental input (406) in the movement initiation function (414) to generate the movement power profile.

6. The method of Claim 2 or 5 or the non-transitory computer-readable medium of Claim 4 or 5, wherein the supplemental input (406) comprises input from a second propulsor controller operably coupled to the first propulsor controller (410).

7. The method of Claim 2, 5 or 6 or the non-transitory computer-readable medium of Claim 4, 5 or 6, wherein generating the movement power profile using the nominal law function (412) and the movement initiation (414) function based on the power input (402) and the movement initiating input (404) comprises:
adjusting the movement initiation function (414) based on the power input (402) and the supplemental input (406);
summing the adjusted movement initiation function (414) and the nominal law function (412); and
generating the movement power profile based on the sum of the adjusted movement initiation function (414) and the nominal law function (412).

8. The method or non-transitory computer-readable medium of any preceding claim, wherein generating the movement power profile using the nominal law function (412) and the movement initiation function (414) based on the power input (402) and the movement initiating input (404) comprises combining an output of the nominal law function (412) and an output of the movement initiation function (414).

9. The method or non-transitory computer-readable medium of Claim 8, wherein combining the nominal law function (412) and the movement initiation function (414) to generate the movement power profile comprises summing the nominal law function (412) and the movement initiation function (414).

10. An electronic device (600), comprising:
a control (302);
a movement initiation interface;
one or more sensors configured to be coupled to an aircraft (100); and
at least one processor (602) coupled to the control (302), the movement initiation interface, and the one or more sensors, the at least one processor (602) is configured to cause the electronic device (600) to:
receive a power input (402) from the control (302);
receive a movement initiation input (404) from the movement initiation interface;
generate a movement power profile using a nominal law function (412) and a movement initiation function (414) based on the power input (402) and the movement initiating input (404); and
actuate effectors (418) of a turbine engine (150) of the aircraft (100) based on the movement power profile.

11. The electronic device (600) of Claim 10, wherein the at least one processor (602) is further configured to cause the electronic device (600) to:
before generating the movement power profile, receive supplemental input (406) from the one or more sensors of the aircraft (100).

12. The electronic device (600) of Claim 11, wherein, while causing the electronic device (600) to generate the movement power profile using the nominal law function (414) and the movement initiation function (414) based on the power input (402) and the movement initiating input (404), the at least one processor (602) is configured to cause the electronic device (600) to:
use the supplemental input (406) in the movement initiation function (414) to generate the movement power profile.

13. The electronic device (600) of Claim 11 or 12, wherein the supplemental input (406) comprises input from a second propulsor controller operably coupled to the electronic device (600).

14. The electronic device (600) of Claim 11, 12 or 13, wherein, while causing the electronic device (600) to generate the movement power profile using the nominal law function (412) and the movement initiation function (414) based on the power input (402) and the movement initiating input (406), the at least one processor (602) is configured to cause the electronic device (600) to:
adjust the movement initiation function based on the power input (402) and the supplemental input (406);
sum the adjusted movement initiation function and the nominal law function (412); and
generate the movement power profile based on the sum of the adjusted movement initiation function (414) and the nominal law function (412).

15. The electronic device (600) of any of Claims 10 to 14, wherein, while causing the electronic device (600) to generate the movement power profile using the nominal law function (412) and the movement initiation function (414) based on the power input (402) and the movement initiating input (404), the at least one processor (602) is configured to cause the electronic device (600) to:
combine an output of the nominal law function (412) and an output of the movement initiation function (414), and, optionally, sum the nominal law function (412) and the movement initiation function (414).
